# EUROPÄISCHE PATENTSCHRIFT

(11) **EP 2 025 560 B1**
(45) Veröffentlichungstag und Bekanntmachung des Hinweises auf die Patenterteilung: **11.08.2010**
(21) Anmeldenummer: 08014133.6
(22) Anmeldetag: 07.08.2008
(51) Int. Cl.: B60R 19/18

(54) **Verfahren zur Herstellung einer Stossfängeranordnung eines Kraftfahrzeugs**
Method for manufacturing a bumper assembly of a motor vehicle
Procédé de fabrication d'un agencement de pare-chocs d'un véhicule automobile

(30) Priorität: 14.08.2007 DE 102007038496
(43) Veröffentlichungstag der Anmeldung: 18.02.2009
(73) Patentinhaber: Benteler Automobiltechnik GmbH, 33102 Paderborn (DE)
(72) Erfinder: Handing, Christian, 33449 Langenberg (DE); Müller, Oliver, 33100 Paderborn (DE); Gehringhoff, Ludger, 33106 Paderborn (DE)
(74) Vertreter: Griepenstroh, Jörg

(56) Entgegenhaltungen:
- EP-A- 1 854 675
- WO-A-00/46074
- WO-A-2006/126941
- WO-A-2007/084044
- DE-A1- 19 849 358
- JP-A- 2001 180 398

## Beschreibung

Die Erfindung betrifft ein Verfahren zur Herstellung einer Stoßfängeranordnung eines Kraftfahrzeugs, sowie eine Stoßfängeranordnung, hergestellt nach dem Verfahren.

Stoßfängersysteme von Kraftfahrzeugen erlangen bezüglich heutiger Gesetzesanforderungen im Bereich der Low-Speed-Tests (bis 16 km/h) eine besondere Bedeutung, da die Auslegung eines Stoßfängersystems unmittelbaren Einfluss auf das Schadensbild und die Schadenshöhe eines Kraftfahrzeugs hat. Das Schadensbild und die Schadenshöhe werden zur Einstufung von Kraftfahrzeugen in bestimmte Versicherungsklassen herangezogen. Je niedriger die zu erwartende Schadenshöhe ist, desto besser ist die versicherungstechnische Einstufung.

Es ist bekannt, den Querträger eines Stoßfängers über Crashboxen mit den Längsträgern des Kraftfahrzeugrahmens zu koppeln. Die zwischen den Längsträgern und Querträger angeordneten Crashboxen können auch Bestandteil des Längsträgers sein und sind in diesem Fall als Reparaturlösung ausgeführt. Üblicherweise werden Crashboxen über Flanschplatten mit den Längsträgern des Kraftfahrzeugs verschraubt. Die Einzelkomponenten der Crashbox, d.h. das sich in Fahrtrichtung erstreckende Crashboxprofil und die Flanschplatte, werden in der Regel miteinander verschweißt. Solche Schweißverbindungen haben den Nachteil, dass sie korrosionsanfällig sind, da die durch Punktschweißungen bedingten Materialdopplungen die Korrosionsbildung fördern.

Aus der DE 198 49 358 C2 ist ein Stoßfänger für Kraftfahrzeuge mit einem quer zu den Längsträgern des Kraftfahrzeugs festlegbaren Biegeträger bekannt. Ein umgeformtes Rohr soll einen biegesteifen Mittelabschnitt und endseitige Deformationsabschnitte aufweisen. Ein solches Profil kann aus Rohren erzeugt werden, welche aus partiell abgewalzten Platinen hergestellt worden sind. Zusätzlich kann eine Aussteifung des Mittelabschnitts durch eine zusätzliche Vergütung erfolgen. Der hieraus hergestellte Biegeträger kann mindestens partiell gehärtet sein und weist in den vergüteten Bereichen hochfeste, mechanische Kennwerte auf.

Aus der JP 2001 180 398 A ist eine weitere Stoßfängeranordnung aus einem tailored welded blank bekannt. Es sollen mehrere hochfeste Stahlplatinen mit unterschiedlicher Festigkeit und Stärke zu einem im Querschnitt im Wesentlichen B-förmigen Stoßfängerquerträger verbunden werden.

Die europäische Patentanmeldung EP 1 854 675 A1 offenbart eine Stoßfängeranordnung mit einem aus einem härtbaren Stahl hergestellten Stoßfängerquerträger. Zur Verbesserung der Umformbarkeit sind die Enden des aus einem hochfesten Stahl hergestellten Stoßfängerquerträgers durch Erhitzen in Ihrer Festigkeit herabgesetzt worden. Das ermöglicht es, die Enden leichter Abzuflachen. Die Endabschnitte besitzen somit eine geringere Härte als der Mittelabschnitt des Stoßfängerquerträgers.

Durch die WO 2007/084044 A1 zählt eine weitere Stoßfängeranordnung zum Stand der Technik, bei welcher ein im Querschnitt U-förmig konfigurierter Stoßfängerquerträger durch Presshärten hergestellt werden soll. Im Anbindungsbereich sollen "Trigger" in Form von Öffnungen oder Faltungen angeordnet sein, um eine gezielte Verformung zu ermöglichen.

Die WO 2006/126 941 A1 offenbart einen U-förmigen Stoßfängerquerträger mit integrierten Crashboxen. Das gesamte Bauteil ist pressgehärtet. U-förmige Querschnitte sind auch aus der WO 00/46074 in unterschiedlichen Ausführungsformen bekannt.

Hiervon ausgehend liegt der Erfindung die Aufgabe zu Grunde, eine Möglichkeit zur Herstellung einer Stoßfängeranordnung aufzuzeigen, die dazu geeignet ist, das Schadensbild und die Schadenshöhe zu reduzieren, aber gleichzeitig ohne aufwändige Schweißverbindungen auskommt.

Diese Aufgabe wird durch die in den Patentansprüchen 1 bis 3 aufgezeigten Verfahren zur Herstellung einer Stoßfängeranordnung gelöst. Die Patentansprüche 7 bis 9 beteffen verschiedene Ausführungen erfindungsgemäßer Stoßfängeranordnungen.

Die Maßnahmen der abhängigen Patentansprüche betreffen vorteilhafte Weiterbildungen des Erfindungsgedankens.

Gegenstand des Patentanspruchs ist ein Verfahren zur Herstellung einer Stoßfängeranordnung eines Kraftfahrzeugs durch Umformung einer Platine zu einem im Querschnitt U-förmig profilierten Stoßfängerquerträger, welcher einen Mittenabschnitt und sich an den Mittenabschnitt endseitig anschließende, als Crashboxen dienende Anbindungsabschnitte aufweist. Das erfindungsgemäße Verfahren umfasst im Wesentlichen folgende Schritte:
a) Bereitstellen einer Platine aus einem vergütbaren Stahl;
b) Umformung der Platine zu einer Stoßfängeranordnung und
c) Härten des Mittenabschnitts während oder im Anschluss an Schritt b), wobei in einem sich im Wesentlichen in horizontale Richtung erstreckenden Obergurt und/oder einem Untergurt der Anbindungsabschnitte partielle Bereiche entweder ungehärtet bleiben oder zur Herabsetzung der Festigkeit erhitzt werden.

Die erfindungsgemäße Stoßfängeranordnung zeichnet sich dadurch aus, dass zu ihrer Herstellung kein Schweißzusammenbau zur Verbindung einer Crashbox mit Flanschplatte eines Längsträgers oder dem Stoßfängerquerträger erforderlich ist. Die Crashbox ist einteiliger Bestandteil der Platine, aus welcher auch der Stoßfängerquerträger hergestellt ist, so dass sich durch die Reduzierung der Bauteile die Problematik der durch Punktschweißung induzierten Korrosionsbildung nicht mehr ergibt.

Auf Grund der einteiligen Herstellungsweise ergeben sich jedoch materialbedingt Einschränkungen bei der Auslegung der Crashbox im Hinblick auf die unterschiedlichen Crashanforderungen. Insbesondere ist ein Materialmix aus einer höchstfesten Platine und einer besonders anprallweichen Crashbox nicht möglich. Um in definierten Bereichen der Stoßfängeranordnung eine hohe Verformbarkeit und in weiteren Bereichen eine hohe Steifigkeit zu ermöglichen, werden im Rahmen der Erfindung alternative Fertigungsverfahren für einteilige Querträgersysteme vorgeschlagen.

In einer ersten Ausführungsform ist vorgesehen, den Mittenabschnitt des Stoßfängerquerträgers während oder im Anschluss an die Umformung der Platine einer Wärmebehandlung zu unterziehen und insbesondere zu härten. Die Härtung kann durch Warmumformung der Blechplatine in einem Umformwerkzeug erfolgen, in welchem zugleich der Härtevorgang stattfindet. Selbstverständlich ist es im Rahmen der Erfindung auch möglich, die Wärmebehandlung bzw. das Härten im Anschluss an den Umformvorgang in einem separaten Arbeitsschritt durchzuführen.

Durch die bereichsabhängige Wärmebehandlung der Stahlplatine ergeben sich Regionen unterschiedlicher Festigkeit und Steifigkeit, wobei insbesondere die Anbindungsabschnitte nicht gehärtet werden, damit diese sich besonders anprallweich verhalten. Es handelt sich somit um ein partiell vergütetes Bauteil. Zusätzlich zu der grundsätzlichen Einteilung in nicht gehärtete und daher anprallweiche Bereiche (Anbindungsabschnitt) und gehärtete und daher sehr feste und steife Bereiche (Mittenabschnitt) können weitere Differenzierungen bei der Wärmebehandlung vorgenommen werden. Unter einem gehärteten Bereich, wie den Mittenabschnitt, ist ein Bereich zu verstehen, der überwiegend gehärtet ist und insgesamt eine höhere Festigkeit und Steifigkeit aufweist als ein überwiegend ungehärteter Bereich. Der Begriff "überwiegend" ist in der Bedeutung von mehr als 50%, insbesondere mehr als 70% und insbesondere mehr als 90% zu verstehen. Die Erfindung schließt somit nicht aus, dass auch in dem gehärteten Mittenabschnitt ein flächenmäßig kleinerer Bereich ungehärtet bleibt. Gleiches gilt umgekehrt auch für den anprallweichen Anbindungsbereich. In einer alternativen Ausführungsform wird vorgeschlagen, mehrere Platinen aus unterschiedlichen Wandstärken und/oder Materialgüten zu einem so genannten tailored welded blank zu verbinden und dieses tailored welded blank zu der gewünschten Stoßfängeranordnung umzuformen, so dass die Wandstärke und/oder Materialgüte im Mittenabschnitt von der Wandstärke und/oder Materialgüte in den Anbindungsabschnitten abweicht. Bei einem tailored welded blank, bei welchem die einzelnen Platinen stoßseitig aneinander geschweißt sind, ergeben sich vielfältige Variationsmöglichkeiten hinsichtlich der Materialien und Wandstärken. Insbesondere ist es unter Verwendung von tailored welded blanks möglich, auch die Anbindungsabschnitte unterschiedlich zu gestalten. Beispielsweise kann in einem der Anbindungsabschnitte ein Durchbruch für eine Abschleppöse angeordnet sein, so dass dieser Anbindungsabschnitt ein abweichendes Verformungsverhalten aufweist als der andere Anbindungsabschnitt. Selbstverständlich ist es auch möglich, die Anbindungsabschnitte hinsichtlich der Materialwahl und Wandstärke auf die jeweiligen Crashanforderungen abzustimmen, die nicht zwangsläufig für beide Anbindungsabschnitte bzw. Crashboxen gleich sind.

Als dritte Alternative kann zur Herstellung der Stoßfängeranordnung auch ein tailored rolled blank zum Einsatz kommen. Hierbei handelt es sich um ein Blechband mit walztechnisch hergestellten Bereichen unterschiedlicher Blechdicken. Ein Vorteil gegenüber dem tailored welded blank ist der homogene Übergang zwischen zwei Dickenbereichen. Auf diese Weise ist es möglich, Festigkeitssprünge zwischen dem Mittenabschnitt und den Endabschnitten zu vermeiden, so dass auf den Mittenabschnitt wirkende Anprallkräfte, ohne dass Spannungsspitzen im Werkstoff provoziert werden, in die Anbindungsabschnitte eingeleitet werden. Auch bei der Verwendung von tailored rolled blanks ist es denkbar, dass sich die Wandstärken der Endabschnitte unterscheiden. Die Stoßfängeranordnung ist daher hinsichtlich der Wahl der Wandstärken nicht zwingend symmetrisch ausgestaltet.

Auch beim Einsatz von tailored rolled oder tailored welded blanks sollen vergütbare Stähle verwendet werden, so dass die zu der Stoßfängeranordnung umgeformte Platine zumindest in ihrem Mittelabschnitt gehärtet werden kann. Hierdurch können die Vorteile unterschiedlicher Materialien bzw. Wandstärken mit den Vorzügen einer gezielten bereichsweisen Wärmebehandlung kombiniert werden, um eine möglichst leichtbauende, korrosionsbeständige und günstig herzustellende Stoßfängeranordnung zu schaffen.

Bei dieser Erfindung wird nicht nur der Mittenabschnitt gehärtet, sondern es werden zusätzlich auch die Anbindungsabschnitte gehärtet. Allerdings sollen dabei partielle Bereiche der Anbindungsabschnitte ungehärtet bleiben, um die mechanische Widerstandsfähigkeit gegen Gefügeänderungen gezielt herabzusetzen und dadurch die plastische Verformbarkeit zu vereinfachen, so dass sich die Crashbox im Falle eines Anpralls nachgiebig verhält. Da die Stoßfängeranordnung im Querschnitt U-förmig konfiguriert ist, sollten die ungehärteten Bereiche in einem sich im Wesentlichen in horizontale Richtung erstreckenden Obergurt und/oder einem Untergurt angeordnet sein.

Dass partielle Bereiche ungehärtet bleiben, kann dadurch erreicht werden, dass beim Härten der ungeformten Platine innerhalb des Umformwerkzeugs partielle Bereiche erwärmt oder umgekehrt gezielt von einer Abkühlung ausgespart werden. Alternativ ist es möglich, die partiellen Bereiche auch nach der Entnahme des Stoßfängerquerträgers aus dem Umformwerkzeug partiell zu erhitzen, um die Festigkeit lokal herabzusetzen. Je höher die gehärteten Bereiche angelassen werden, desto mehr verringert sich dort die Härte bei gleichzeitiger Zunahme der Zähigkeit.

In einer weiteren Ausführungsform ist vorgesehen, dass mehrere ungehärtete oder erhitzte Bereiche, d.h. solche mit herabgesetzter Härte und gesteigerter Zähigkeit, quer zur Längserstreckung des Stoßfängerquerträgers aufeinander folgend ausgebildet werden. Dadurch kann eine gezielte Faltung des Anbindungsabschnitts herbeigeführt werden.

Der Aufbau eines einteiligen Querträgersystems lässt nur eingeschränkt eine wirtschaftliche Herstellung von Sicken oder Ausstellungen zu. Um trotzdem eine definierte Verformung im Bereich des Anbindungsabschnitts herbeizuführen, ist es möglich, Aussparungen in Form von Bohrungen oder Langlöchern vorzusehen. Als besonders wirksam wird es angesehen, dass in dem Obergurt und/oder Untergurt im Bereich der Anbindungsabschnitte wenigstens zwei quer zur Längserstreckung des Stoßfängerquerträgers aufeinander folgende Langlöcher ausgebildet werden. Durch dieser Schwächung des Querschnitts ergibt sich ebenfalls die gewünschte Verformbarkeit im Bereich des Anbindungsabschnitts, der bei der beanspruchten Stoßfängeranordnung als Crashbox fungiert.

Die Langlöcher können von unterschiedlicher Länge sein. Sie können zueinander in Längserstreckung des Stoßfängerunterträgers versetzt angeordnet sein. Mehrere kurze Langlöcher oder Öffnungen können auch in Längsrichtung des Stoßfängerquerträgers nebeneinander angeordnet sein, d.h. quer zur Fahrzeuglängsrichtung bzw. Stoßrichtung verlaufen, jedoch in Stoßrichtung gesehen hintereinander liegen. Entscheidend ist, dass die gezielt herbeigeführten Schwächungen der Struktur eine vorhersehbare Verformung der Anbindungsabschnitte ermöglichen. In diesem Sinne gelten die vorstehenden Variationsmöglichkeiten hinsichtlich der Anordnung der Langlöcher/Öffnungen auch für die in ihrer Härte reduzierten partiellen Bereiche. Die Langlöcher werden vorzugsweise schon in den Platinenzuschnitt eingebracht, der später zu dem gewünschten Stoßfängerquerträger umgeformt wird.

Die erfindungsgemäßen Verfahren stellen eine Stoßfängeranordnung bereit, mit welcher es möglich ist, auf separat zu montierende Crashboxen vollständig zu verzichten, so dass die erfindungsgemäße Stoßfängeranordnung unmittelbar an den Längsträgern des Kraftfahrzeugs befestigt werden kann. Die steifigkeitsbeeinflussenden geometrischen Veränderungen oder Änderungen des Gefüges ermöglichen die Kombination von widerstandsfähigen, biegesteifen Mittenabschnitten des Stoßfängerquerträgers mit anprallweichen, d.h. nachgiebigen, Anbindungsabschnitten, die als Crashboxen fungieren und auf Grund der vorbeschriebenen Herstellungsverfahren kostengünstig realisiert werden können.

Die Erfindung wird nachfolgend anhand der in den Figuren 1 bis 5 schematisch dargestellten Ausführungsbeispiele näher erläutert. Es zeigt:
- Figur 1: in perspektivischer Ansicht eine Stoßfängeranordnung aus einer wärmebehandelten Platine;
- Figur 2: eine Stoßfängeranordnung aus einem tailored welded blank;
- Figur 3: eine Stoßfängeranordnung aus einem tailored rolled blank;
- Figur 4: einen Anbindungsabschnitt einer Stoßfängeranordnung in der Draufsicht und
- Figur 5: eine weitere Ausführungsform eines Anbindungsabschnitts einer Stoßfängeranordnung in der Draufsicht.

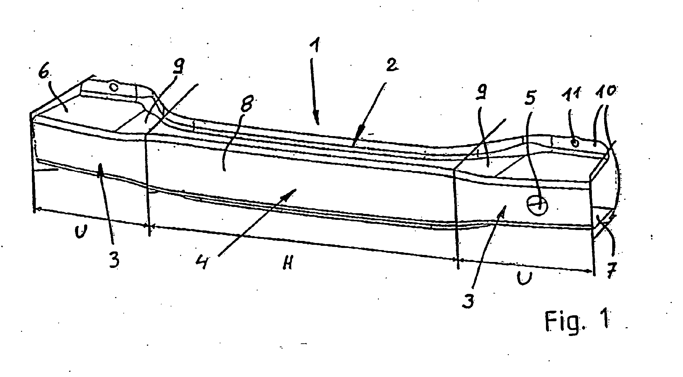

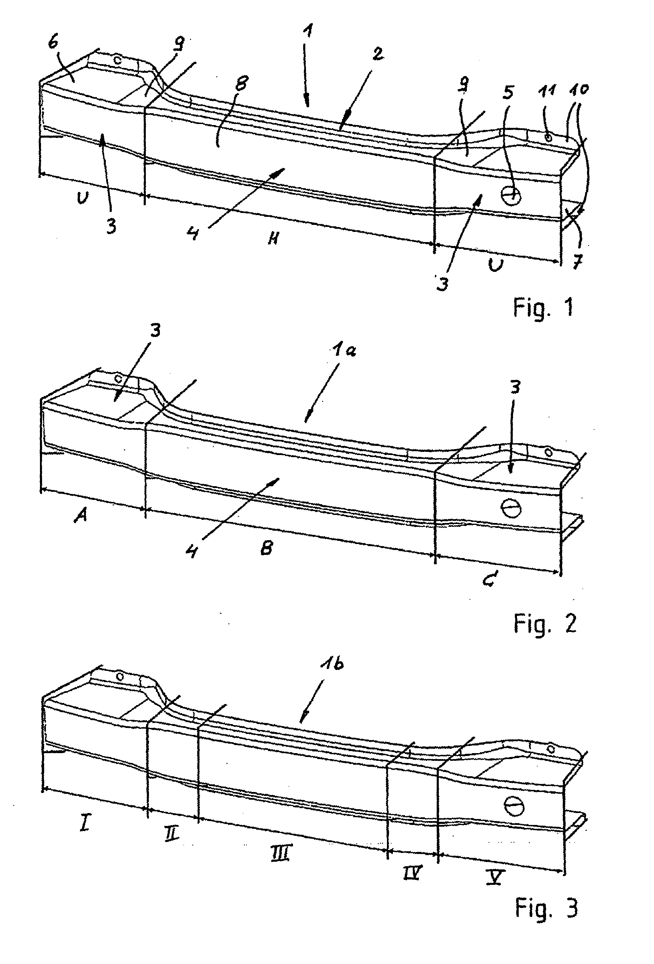

Figur 1 zeigt eine Stoßfängeranordnung 1 für ein nicht näher dargestelltes Kraftfahrzeug. Die Stoßfängeranordnung 1 ist durch Umformung einer Platine aus einem vergütbaren Stahl hergestellt und im Querschnitt U-förmig profiliert.

Die Stoßfängeranordnung 1 umfasst zwei funktionale Komponenten, nämlich einen Stoßfängerquerträger 2 und einstückig mit dem Stoßfängerquerträger 2 ausgebildete Crashboxen, welche in diesem Ausführungsbeispiel endseitige Anbindungsabschnitte 3 bilden, zur Befestigung des Stoßfängerquerträgers 2 an Längsträgern des Kraftfahrzeugs. Der Bereich zwischen den Anbindungsabschnitten 3 wird als Mittenabschnitt 4 bezeichnet.

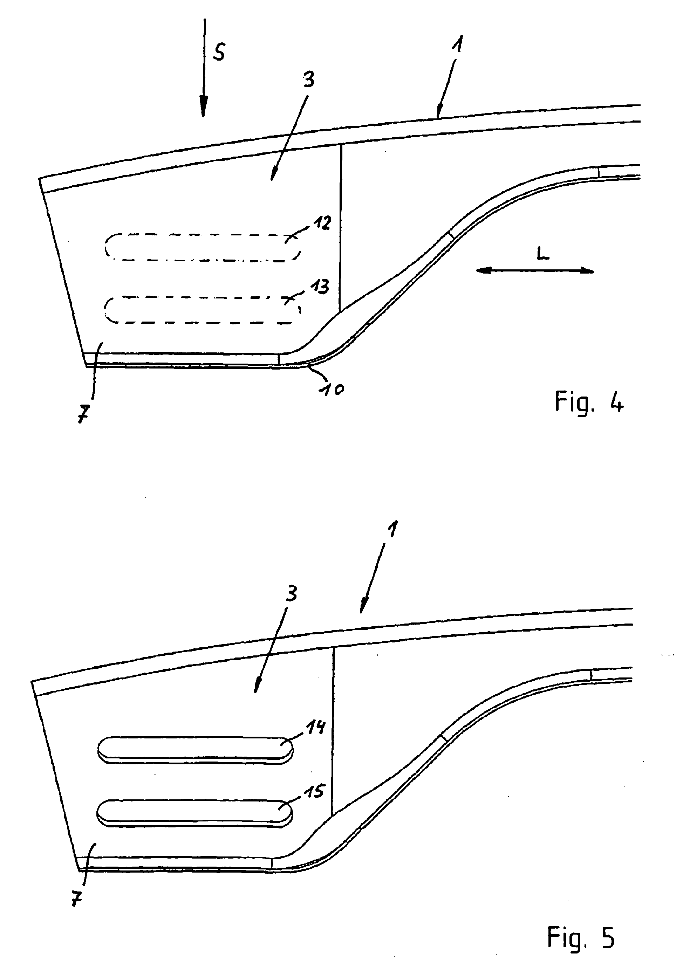

Der U-förmig profilierte Stoßfängerquerträger 2 weist mit seiner offenen Seite in Richtung auf die nicht näher dargestellten Längsträger. Dementsprechend ist seine Frontseite bis auf eine Öffnung 5 zur Durchführung einer Abschleppöse in dem in der Bildebene rechten Anbindungsabschnitt 3 geschlossen. Ein sich in der Einbaulage im Wesentlichen in horizontale Richtung erstreckender Obergurt 6 und ein Untergurt 7 verlaufen im Wesentlichen parallel zueinander und sind über einen frontseitigen Steg 8 miteinander verbunden. Der Abstand zwischen Obergurt 6 und Untergurt 7 bzw. die Breite des Stegs variieren über die Längserstreckung der Stoßfängeranordnung 1. Insbesondere nimmt die in Hochrichtung gemessene Breite des Stegs 8 zu den Enden hin ab, so dass der Abstand zwischen Obergurt 6 und Untergurt 7 im Bereich der Anbindungsabschnitte 3 geringer ist als im Bereich des Mittenabschnitts 4. Die Veränderung des Abstands erfolgt nicht sprunghaft, sondern kontinuierlich innerhalb von Übergangsabschnitten 9. Innerhalb des Mittenabschnitts 4 und der Anbindungsabschnitte 3 ist der Abstand zwischen Obergurt 6 und Untergurt 7 allerdings wieder konstant. Die Übergangsabschnitte 9 sind allerdings auch **dadurch gekennzeichnet, dass** die Tiefe des U-förmig profilierten Stoßfängerquerträgers 2 zunimmt. Die Breite des Obergurts 6 und des Untergurts 7 ist daher in den Anbindungsabschnitten 3, welche die Crashboxen bilden, maximal. Dies ist insbesondere der Darstellungen der Figuren 4 und 5 zu erkennen. Der Grund ist darin zu sehen, dass im Bereich der Anbindungsabschnitte 3 ein hinreichender Verformungsweg zur Verfügung gestellt werden soll, wohingegen die daraus resultierende Materialanhäufung im Mittenabschnitt 4 erforderlich ist, so dass die Breite des Obergurts 6 und des Untergurts 7 im Mittenabschnitt 4 deutlich geringer sein kann.

Ferner ist anhand der Figuren 1 bis 3 zu erkennen, dass die dem Steg 8 abgewandten Enden des Obergurts 6 und des Untergurts 7 in entgegengesetzte Richtungen nach außen weisende Flanschkragen 10 besitzen, welche zur Befestigung der Stoßfängeranordnung 1 an nicht näher dargestellten Längsträgern dienen. Die Fixierung der Stoßfängeranordnung 1 an den Längsträger kann insbesondere über wenigstens eine Bohrung 11 in dem obergurtseitigen bzw. untergurtseitigen Flanschkragen 10 erfolgen.

Das Besondere an der in Figur 1 dargestellten Stoßfängeranordnung ist die Einteiligkeit des Stoßfängerquerträgers 2 mit den als Crashboxen dienenden Anbindungsabschnitten 3 sowie die unterschiedlichen Materialeigenschaften des Mittenabschnitts 4 und der Anbindungsabschnitte 3. In diesem Ausführungsbeispiel ist der mit H gekennzeichnete Bereich, also der Bereich des Mittenabschnitts 4, gehärtet worden, wohingegen die mit U gekennzeichneten Bereiche, d.h. die Anbindungsabschnitte 3, ungehärtet sind. Dadurch ergeben sich unterschiedliche Materialeigenschaften über den Längsverlauf der Stoßfängeranordnung 1 mit dem Ziel der Ausbildung biegeweicher Anbindungsabschnitte 3 eines biegesteifen Mittenabschnitts 4.

Die Ausführungsform der Figur 2 unterscheidet sich von derjenigen der Figur 1 dadurch, dass die Platine, aus welcher die Stoßfängeranordnung 1a hergestellt ist, Bereiche unterschiedlicher Wandstärken und/oder Materialgüten aufweist. Als Ausgangswerkstoff wurde ein tailored welded blank verwendet, das so konfiguriert worden ist, dass im Bereich des in der Bildebene linken Anbindungsabschnitts 3 ein Stahlwerkstoff A zum Einsatz kommt, während im Mittenabschnitt 4 ein Stahlwerkstoff B zum Einsatz kommt und schließlich im zweiten Anbindungsabschnitt 3 ein Stahlwerkstoff C. Die Bereiche, über welche sich die einzelnen Werkstoffe erstrecken, sind mit den Buchstaben A, B, C gekennzeichnet. Im Übrigen wurden die Bezugszeichen aus der Figur 1 übernommen. Die unterschiedlichen Werkstoffe A, B, C stehen für unterschiedliche Materialgüten, aber auch für unterschiedliche Wandstärken, so dass durch die Verwendung von tailored welded blanks eine anforderungsgerechte Stoßfängeranordnung hergestellt werden kann.

In der alternativen Ausführungsform gemäß Figur 3 ist eine Stoßfängeranordnung 1b dargestellt, die aus einem tailored rolled blank hergestellt ist. Im Unterschied zu der Ausführungsform der Figur 2 sind bei tailored rolled blanks Wanddickenunterschiede weniger sprunghaft. Außerdem besteht die Platine aus einem einzigen Werkstoff, dessen Dickenbereiche im vorliegenden Ausführungsbeispiel mit I bis V gekennzeichnet sind. Es ist denkbar, dass die Wandstärke in den Bereichen I und V identisch ist. Selbstverständlich sind auch Abweichungen zwischen allen Wandstärkenbereichen sowie zusätzliche Wärmebehandlungen möglich, um eine den Crashtestanforderungen genügende Stoßfängeranordnung 1b herzustellen.

Figur 4 zeigt ein Detail der Stoßfängeranordnung 1 in der Draufsicht. Es handelt sich um einen Anbindungsabschnitt 3, welcher mit Ausnahme der mit unterbrochener Linie eingezeichneten Bereiche 12, 13 gehärtet ist. Die Bereiche 12, 13 sind entweder während des Härtevorgangs ausgespart worden oder gezielt erhitzt worden, um die Festigkeit wieder herabzusetzen. Die ungehärteten oder erhitzten Bereiche 12, 13 erstrecken sich quer zur Längserstreckung L der Stoßfängeranordnung 1, so dass sie in Richtung der mit S gekennzeichneten Stoßrichtung eine gezielte Faltung des Anbindungsabschnitts 3 und somit eine gewünschte Verformung bewirken.

Die Ausführungsform der Figur 5 unterscheidet sich von derjenigen der Figur 4, dass ebenfalls sich in Längserstreckung L des Stoßfängerquerträgers 2 aufeinander folgende Schwächungen in dem Obergurt 7 ausgebildet sind. Allerdings handelt es sich hierbei um Langlöcher 14, 15, welche die Wirkung entfalten wie die gezielt hinsichtlich der gefügeveränderten Bereiche 12, 13, nämlich die Verringerung der Steifigkeit des Anbindungsabschnitts 3 zur Verbesserung der plastischen Verformbarkeit.

**Bezugszeichen:**
- 1 -: Stoßfängeranordnung
- 1a -: Stoßfängeranordnung
- 1b -: Stoßfängeranordnung
- 2 -: Stoßfängerquerträger
- 3 -: Anbindungsabschnitt
- 4 -: Mittenabschnitt
- 5 -: Öffnung
- 6 -: Obergurt
- 7 -: Untergurt
- 8 -: Steg
- 9 -: Übergangsabschnitt
- 10 -: Flanschkragen
- 11 -: Bohrung
- 12 -: Bereich
- 13 -: Bereich
- 14 -: Langloch
- 15 -: Langloch

- A -: Werkstoffbereich
- B -: Werkstoffbereich
- C -: Werkstoffbereich
- H -: gehärteter Abschnitt
- L -: Längserstreckung
- S -: Stoßrichtung
- U -: umgeformt ungehärteter Abschnitt
- I -: Wandstärkenabschnitt
- II -: Wandstärkenabschnitt
- III -: Wandstärkenabschnitt
- IV -: Wandstärkenabschnitt
- V -: Wandstärkenabschnitt

## Patentansprüche

1. Verfahren zur Herstellung einer Stoßfängeranordnung (1) eines Kraftfahrzeugs durch Umformung einer Platine zu einem im Querschnitt U-förmig profilierten Stoßfängerquerträger (2), welcher einen Mittenabschnitt (4) und sich an den Mittenabschnitt (4) endseitig anschließende, als Crashboxen dienende Anbindungsabschnitte (3) aufweist, mit folgenden Schritten:
a) Bereitstellen einer Platine aus einem vergütbaren Stahl;
b) Umformung der Platine zu der Stoßfängeranordnung (1);
c) Härten des Mittenabschnitts (4) und der Anbindungsabschnitte (3) während oder im Anschluss an Schritt b), wobei in einem sich im Wesentlichen in horizontale Richtung erstreckenden Obergurt (6) und/oder einem Untergurt (7) der Anbindungsabschnitte (3) partielle Bereiche (12, 13) entweder ungehärtet bleiben oder zur Herabsetzung der Festigkeit erhitzt werden.

2. Verfahren zur Herstellung einer Stoßfängeranordnung (1a) eines Kraftfahrzeugs durch Umformung einer Platine zu einem im Querschnitt U-förmig profilierten Stoßfängerquerträger (2), welcher einen Mittenabschnitt (4) und sich an den Mittenabschnitt (4) endseitig anschließende, als Crashboxen dienende Anbindungsabschnitte (3) aufweist, mit folgenden Schritten:
a) Bereitstellen mehrerer vergütbarer Platinen aus unterschiedlichen Wandstärken und/oder Materialgüten aus Stahl;
b) Verschweißen der Platinen zu einem tailored welded blank;
c) Umformung der Stahlplatine zu der Stoßfängeranordnung (1a), so dass die Wandstärke und/oder Materialgüte im Mittenabschnitt (4) von der Wandstärke und/oder Materialgüte in den Anbindungsabschnitten (3) abweicht;
d) Härten des Mittenabschnitts (4) und der Anbindungsabschnitte (3) während oder im Anschluss an Schritt b), wobei in einem sich im Wesentlichen in horizontale Richtung erstreckenden Obergurt (6) und/oder einem Untergurt (7) der Anbindungsabschnitte (3) partielle Bereiche (12, 13) entweder ungehärtet bleiben oder zur Herabsetzung der Festigkeit erhitzt werden.

3. Verfahren zur Herstellung einer Stoßfängeranordnung (1b) eines Kraftfahrzeugs durch Umformung einer Platine zu einem im Querschnitt U-förmig profilierten Stoßfängerquerträger (2), welcher einen Mittenabschnitt (4) und sich an den Mittenabschnitt (4) endseitig anschließende, als Crashboxen dienende Anbindungsabschnitte (3) aufweist, mit folgenden Schritten:
a) Bereitstellen einer vergütbaren Stahlplatine aus einem tailored rolled blank;
b) Umformung der Stahlplatine zu der Stoßfängeranordnung (1b), so dass die Wandstärke im Mittenabschnitt (4) von der Wandstärke in den Anbindungsabschnitten (3) abweicht;
c) Härten des Mittenabschnitts (4) und der Anbindungsabschnitte (3) während oder im Anschluss an Schritt b), wobei in einem sich im Wesentlichen in horizontale Richtung erstreckenden Obergurt (6) und/oder einem Untergurt (7) der Anbindungsabschnitte (3) partielle Bereiche (12, 13) entweder ungehärtet bleiben oder zur Herabsetzung der Festigkeit erhitzt werden.

4. Verfahren nach einem der Ansprüche 1 bis 3, **dadurch gekennzeichnet, dass** mehrere ungehärtete oder erhitzte Bereiche (12, 13) quer zur Längserstreckung (c) der Stoßfängeranordnung (2) aufeinanderfolgend ausgebildet werden.

5. Verfahren nach einem der Ansprüche 1 bis 4, **dadurch gekennzeichnet, dass** in einem sich im Wesentlichen in horizontale Richtung erstreckenden Obergurt (6) und/oder einem Untergurt (7) im Bereich der Anbindungsabschnitte (3) wenigstens zwei quer zur Längserstreckung des Stoßfängerquerträgers (2) aufeinanderfolgende Langlöcher (14, 15) ausgebildet werden.

6. Verfahren nach Anspruch 5, **dadurch gekennzeichnet, dass** die Langlöcher (14, 15) vor der Umformung der Platine zu einem Stoßfängerquerträger ausgebildet werden.

7. Stoßfängeranordnung eines Kraftfahrzeugs mit folgenden Merkmalen:
- eine Platine aus vergütbarem Stahl ist zu einem im Querschnitt U-förmig profilierten Stoßfängerquerträger (2) umgeformt,
- der Stoßfängerquerträger (2) weist einen Mittenabschnitt (4) und sich an den Mittenabschnitt (4) endseitig anschließende Anbindungsabschnitte (3) auf,
- die Anbindungsabschnitte (3) dienen als Crashboxen,
- der Mittenabschnitt (4) ist gehärtet,
- in einem sich im Wesentlichen in horizontale Richtung erstreckenden Obergurt (6) und/oder einem Untergurt (7) der Anbindungsabschnitte sind partielle Bereiche entweder ungehärtet ausgeführt oder durch Erhitzen in ihrer Festigkeit herabgesetzt.

8. Stoßfängeranordnung eines Kraftfahrzeugs mit folgenden Merkmalen:
- mehrere vergütbare Platinen aus unterschiedlichen Wandstärken und/oder Materialgüten bilden ein tailored welded blank, welches zu einem im Querschnitt U-förmig profilierten Stoßfängerquerträger (2) umgeformt ist,
- der Stoßfängerquerträger (2) weist einen Mittenabschnitt (4) und sich an den Mittenabschnitt (4) endseitig anschließende Anbindungsabschnitte (3) auf,
- die als tailored welded blank ausgeführte Stahlplatine ist so konfiguriert, dass die Wandstärke und/oder Materialgüte im Mittenabschnitt (4) von der Wandstärke und/oder Materialgüte in den Anbindungsabschnitten (3) abweicht
- die Anbindungsabschnitte (3) dienen als Crashboxen,
- der Mittenabschnitt (4) ist gehärtet,
- in einem sich im Wesentlichen in horizontale Richtung erstreckenden Obergurt (6) und/oder einem Untergurt (7) der Anbindungsabschnitte sind partielle Bereiche entweder ungehärtet ausgeführt oder durch Erhitzen in ihrer Festigkeit herabgesetzt.

9. Stoßfängeranordnung eines Kraftfahrzeugs mit folgenden Merkmalen:
- eine aus einem tailored rolled blank bestehende Platine aus vergütbarem Stahl ist zu einem im Querschnitt U-förmig profilierten Stoßfängerquerträger (2) umgeformt,
- der Stoßfängerquerträger (2) weist einen Mittenabschnitt (4) und sich an den Mittenabschnitt (4) endseitig anschließende Anbindungsabschnitte (3) auf,
- die vergütbare Stahlplatine ist so konfiguriert, dass die Wandstärke und/oder Materialgüte im Mittenabschnitt (4) von der Wandstärke und/oder Materialgüte in den Anbindurigsabschnitten (3) abweicht
- die Anbindungsabschnitte (3) dienen als Crashboxen,
- der Mittenabschnitt (4) ist gehärtet,
- in einem sich im Wesentlichen in horizontale Richtung erstreckenden Obergurt (6) und/oder einem Untergurt (7) der Anbindungsabschnitte sind partielle Bereiche entweder ungehärtet ausgeführt oder durch Erhitzen in ihrer Festigkeit herabgesetzt.

10. Stoßfängeranordnung nach einem der Ansprüche 7 bis 9, **dadurch**
**gekennzeichnet, dass** mehrere ungehärtete oder erhitzte Bereiche (12, 13) quer zur Längserstreckung (L) der Stoßfängeranordnung (2) aufeinander folgend ausgebildet sind.

11. Stoßfängeranordnung nach Anspruch 10, **dadurch gekennzeichnet,**
**dass** in dem Obergurt (6) und/oder im Untergurt (7) im Bereich der Anbindungsabschnitte (3) wenigstens zwei sich in Längsrichtung des Stoßfängerquerträgers (2) erstreckende und quer zur Längserstreckung des Stoßfängerquerträgers (2) aufeinander folgende Langlöcher (14, 15) ausgebildet sind.

12. Stoßfängeranordnung nach Anspruch 11, **dadurch gekennzeichnet,**
**dass** die Langlöcher (14, 15) vor der Umformung der Platine zu einem Stoßfängerquerträger (2) in der Platine ausgebildet sind.

## Claims

1. Method for manufacturing a bumper assembly (1) of a motor vehicle by shaping a blank into a bumper cross-member (2) with a U-shaped profile, which has a middle section (4) and connecting sections (3) attached to the ends of the middle section (4) and serving as crashboxes, with the following steps:
a) providing a blank made of heat-treatable steel;
b) shaping the blank into the bumper assembly (1);
c) hardening of the middle section (4) and of the connecting sections (3) during or following step b) while partial areas (12, 13) in an upper flange (6) and/or a lower flange (7) of the connecting sections (3) extending essentially in the horizontal direction either remain unhardened or are heated in order to reduce their strength.

2. Method for manufacturing a bumper assembly (1a) of a motor vehicle by shaping a blank into a bumper cross-member (2) with a U-shaped profile, which has a middle section (4) and connecting sections (3) attached to the ends of the middle section (4) and serving as crashboxes, with the following steps:
a) providing several heat-treatable steel blanks of varying wall thicknesses and/or material qualities;
b) welding the blanks into a tailored welded blank;
c) shaping the steel blank into the bumper assembly (1a), so that the wall thickness and/or material qualities in the middle section (4) varies from the wall thickness and/or material quality in the connecting sections (3);
d) hardening of the middle section (4) and of the connecting sections (3) during or following step b) while partial areas (12, 13) of an upper flange (6) and/or a lower flange (7) of the connecting sections (3) extending essentially in the horizontal direction either remain unhardened or are heated in order to reduce their strength.

3. Method for manufacturing a bumper assembly (1b) of a motor vehicle by shaping a blank into a bumper cross-member (2) with a U-shaped profile, which has a middle section (4) and connecting sections (3) attached to the ends of the middle section (4) and serving as crashboxes, with the following steps:
a) providing a heat-treatable steel blank from a tailored rolled blank;
b) shaping the steel blank into the bumper assembly (1b), so that the wall thickness in the middle section (4) varies from the wall thickness in the connecting sections (3);
c) hardening of the middle section (4) and of the connecting sections (3) during or following step b) while partial areas (12, 13) of an upper flange (6) and/or a lower flange (7) of the connecting sections (3) extending essentially in the horizontal direction either remain unhardened or are heated in order to reduce their strength.

4. Method according to one of claims 1 to 3, **characterised in that** several successive unhardened or heated areas (12, 13) are formed transversely to the longitudinal extension (c) of the bumper assembly (2).

5. Method according to one of claims 1 to 4, **characterised in that** at least two successive slots (14, 15) are formed transversely to the longitudinal extension of the bumper assembly (2), in an upper flange (6) and/or a lower flange (7) of the connecting sections (3) extending essentially in the horizontal direction.

6. Method according to claim 5, **characterised in that** the slots (14, 15) are formed before the blank is shaped into a bumper cross-beam.

7. Bumper assembly of a motor vehicle with the following features:
- a blank of heat-treatable steel is shaped into a bumper cross-member (2) with a U-shaped profile,
- the bumper cross-member (2) has a middle section (4) and connecting sections (3) attached to the ends of the middle section (4),
- the connecting sections serve as crashboxes,
- the middle section (4) is hardened,
- partial areas in an upper flange (6) and/or a lower flange (7) of the connecting sections extending essentially in the horizontal direction are either realised unhardened or are reduced in strength by heating.

8. Bumper assembly of a motor vehicle with the following features:
- several heat-treatable blanks of varying wall thicknesses and/or material qualities form a tailored welded blank, which is shaped into a bumper cross-member (2) with a U-shaped profile in cross-section,
- the bumper cross-member (2) has a middle section (4) and connecting sections (3) attached to the ends of the middle section (4),
- the steel blank realised as a tailored welded blank is configured in such a way that the wall thickness and/or material quality in the middle section (4) varies from the wall thickness and/or material quality in the connecting sections (3),
- the connecting sections serve as crashboxes,
- the middle section (4) is hardened,
- partial areas (12, 13) in an upper flange (6) and/or a lower flange (7) of the connecting sections extending essentially in the horizontal direction are either realised unhardened or are reduced in strength by heating.

9. Bumper assembly of a motor vehicle with the following features:
- a heat-treatable steel blank consisting of a tailored welded blank is shaped into a bumper cross-member (2) with a U-shaped profile in cross-section,
- the bumper cross-member (2) has a middle section (4) and connecting sections (3) attached to the ends of the middle section (4),
- the heat-treatable steel blank is configured in such a way that the wall thickness and/or material quality in the middle section (4) varies from the wall thickness and/or material quality in the connecting sections (3),
- the connecting sections serve as crashboxes,
- the middle section (4) is hardened,
- partial areas (12, 13) in an upper flange (6) and/or a lower flange (7) of the connecting sections extending essentially in the horizontal direction are either realised unhardened or are reduced in strength by heating.

10. Bumper assembly according to one of claims 7 to 9, **characterised in that** several successive unhardened or heated areas (12, 13) are formed transversely to the longitudinal extension (L) of the bumper assembly (2).

11. Bumper assembly according to claim 10, **characterised in that** at least two successive slots (14, 15) extending in the longitudinal extension of the bumper cross-member (2) and transversely to the longitudinal extension of the bumper assembly (2) are formed in the upper flange (6) and/or in the lower flange (7) in the area of the connecting sections (3).

12. Bumper assembly according to claim 11, **characterised in that** the slots (14, 15) are formed in the blank before the blank is shaped into a bumper cross-member (2).

## Revendications

1. Procédé pour la fabrication d'un agencement de pare-chocs (1) d'un véhicule automobile par déformation d'une plaque pour donner une traverse de pare-chocs (2) présentant en section transversale un profil en forme de U qui comporte un tronçon médian (4) et des tronçons de liaison (3), raccordés aux extrémités du tronçon médian (4) et servant de boîtiers déformables dits "crashbox", comprenant les étapes suivantes :
a) préparation d'une plaque en acier susceptible d'être traitée ;
b) déformation de la plaque pour donner l'agencement de pare-chocs (1);
c) durcissement du tronçon médian (4) et des tronçons de liaison (3) pendant l'étape b) ou à la suite de celle-ci, de sorte que, dans une membrure supérieure (6) et/ou dans une membrure inférieure (7), s'étendant sensiblement en direction horizontale, des tronçons de liaison (3), des zones partielles (12, 13)
- soit restent non durcies,
- soit sont échauffées pour réduire leur solidité.

2. Procédé pour la fabrication d'un agencement de pare-chocs (1a) d'un véhicule automobile par déformation d'une plaque pour donner une traverse de pare-chocs (2) présentant en section transversale un profil en forme de U qui comporte un tronçon médian (4) et des tronçons de liaison (3), raccordés aux extrémités du tronçon médian (4) et servant de boîtiers déformables dits "crashbox", comprenant les étapes suivantes :
a) préparation de plusieurs plaques en acier susceptibles d'être traitées, avec des épaisseurs différentes et/ou des matériaux de qualités différentes ;
b) soudage des plaques pour réaliser un tailored welded blank;
c) déformation de la plaque en acier pour donner l'agencement de pare-chocs (1a), de telle manière que l'épaisseur et/ou la qualité du matériau dans le tronçon médian (4) diffère de l'épaisseur et/ou de la qualité du matériau dans les tronçons de liaison (3) ;
d) durcissement du tronçon médian (4) et des tronçons de liaison (3) pendant l'étape b) ou à la suite de celle-ci, de sorte que, dans une membrure supérieure (6) et/ou dans une membrure inférieure (7), s'étendant sensiblement en direction horizontale, des tronçons de liaison (3), des zones partielles (12, 13)
- soit restent non durcies,
- soit sont échauffées pour réduire leur solidité.

3. Procédé pour la fabrication d'un agencement de pare-chocs (1b) d'un véhicule automobile par déformation d'une plaque pour donner une traverse de pare-chocs (2) présentant en section transversale un profil en forme de U qui comporte un tronçon médian (4) et des tronçons de liaison (3), raccordés aux extrémités du tronçon médian (4) et servant de boîtiers déformables dits "crashbox", comprenant les étapes suivantes :
a) préparation d'une plaque en acier susceptible d'être traitée, à partir d'un tailored rolled blank ;
b) déformation de la plaque pour donner l'agencement de pare-chocs (1b), de telle manière que l'épaisseur dans le tronçon médian (4) diffère de l'épaisseur dans les tronçons de liaison (3) ;
c) durcissement du tronçon médian (4) et des tronçons de liaison (3) pendant l'étape b) ou à la suite de celle-ci, de sorte que, dans une membrure supérieure (6) et/ou dans une membrure inférieure (7), s'étendant sensiblement en direction horizontale, des tronçons de liaison (3), des zones partielles (12, 13)
- soit restent non durcies,
- soit sont échauffées pour réduire leur solidité.

4. Procédé selon l'une des revendications 1 à 3, **caractérisé en ce que** plusieurs zones (12, 13) non durcies ou échauffées sont réalisées à la suite les unes des autres transversalement à l'extension longitudinale (c) de l'agencement de pare-chocs (2).

5. Procédé selon l'une des revendications 1 à 4, **caractérisé en ce qu'**au moins deux trous oblongs (14, 15) qui se suivent mutuellement
transversalement à l'extension longitudinale de la traverse de pare-chocs (2) sont ménagés dans la région des tronçons de liaison (3) dans une membrure supérieure (6) et/ou dans une membrure inférieure (7) qui s'étend sensiblement en direction horizontale.

6. Procédé selon la revendication 5, **caractérisé en ce que** les trous oblongs (14, 15) sont réalisés avant la déformation de la plaque pour donner une traverse de pare-chocs.

7. Agencement de pare-chocs d'un véhicule automobile, comprenant les caractéristiques suivantes :
- une plaque en acier susceptible d'être traité qui est déformée pour donner une traverse de pare-chocs (2) présentant en section transversale un profil en forme de U,
- la traverse de pare-chocs (2) comporte un tronçon médian (4) et deux tronçons de liaison (3) qui se raccordent aux extrémités au tronçon médian (4),
- les tronçons de liaison (3) servent de boîtiers déformables dits "crashbox",
- le tronçon médian (4) est durci,
- dans une membrure supérieure (6) et/ou dans une membrure inférieure (7), s'étendant sensiblement en direction horizontale, des tronçons de liaison (3), des zones partielles (12, 13) sont réalisées
- soit non durcies,
- soit avec une solidité réduite par échauffement.

8. Agencement de pare-chocs d'un véhicule automobile, comprenant les caractéristiques suivantes :
- plusieurs plaques en acier susceptible d'être traité avec des épaisseurs différentes et/ou des matériaux de qualités différentes forment un tailored welded blank qui est déformé pour donner une traverse de pare-chocs (2) présentant en section transversale un profil en forme de U,
- la traverse de pare-chocs (2) comporte un tronçon médian (4) et des tronçons de liaison (3) qui se raccordent aux extrémités au tronçon médian (4),
- la plaque en acier réalisée sous forme de "tailored welded blank" est configurée de telle manière que l'épaisseur et/ou la qualité du matériau dans le tronçon médian (4) diffère de l'épaisseur et/ou de la qualité du matériau dans les tronçons de liaison (3) ;
- les tronçons de liaison (3) servent de boîtiers déformables dits "crashbox",
- le tronçon médian (4) est durci,
- dans une membrure supérieure (6) et/ou dans une membrure inférieure (7), s'étendant sensiblement en direction horizontale, des tronçons de liaison, des zones partielles (12, 13) sont réalisées
- soit non durcies,
- soit avec une solidité réduite par échauffement.

9. Agencement de pare-chocs d'un véhicule automobile, comprenant les caractéristiques suivantes :
- une plaque en acier susceptible d'être traité constituée par un tailored rolled blank qui est déformé pour donner une traverse de pare-chocs (2) présentant en section transversale un profil en forme de U,
- la traverse de pare-chocs (2) comporte un tronçon médian (4) et des tronçons de liaison (3) qui se raccordent aux extrémités au tronçon médian (4),
- la plaque en acier susceptible d'être traité est configurée de telle manière que l'épaisseur et/ou la qualité du matériau dans le tronçon médian (4) diffère de l'épaisseur et/ou de la qualité du matériau dans les tronçons de liaison (3) ;
- les tronçons de liaison (3) servent de boîtiers déformables dits "crashbox",
- le tronçon médian (4) est durci,
- dans une membrure supérieure (6) et/ou dans une membrure inférieure (7), s'étendant sensiblement en direction horizontale, des tronçons de liaison, des zones partielles (12, 13) sont réalisées
- soit non durcies,
- soit avec une solidité réduite par échauffement.

10. Agencement de pare-chocs selon l'une des revendications 7 à 9, **caractérisé en ce que** plusieurs zones (12, 13) non durcies ou échauffées sont réalisées à la suite les unes des autres transversalement à l'extension longitudinale (L) de l'agencement de pare-chocs (2).

11. Agencement de pare-chocs selon la revendication 10, **caractérisé en ce qu'**au moins deux trous oblongs (14, 15) qui se suivent mutuellement transversalement à l'extension longitudinale de la traverse de pare-chocs (2) sont ménagés dans la région des tronçons de liaison (3) dans une membrure supérieure (6) et/ou dans une membrure inférieure (7) qui s'étend sensiblement en direction horizontale.

12. Agencement de pare-chocs selon la revendication 11, **caractérisé en ce que** les trous oblongs (14, 15) sont réalisés dans la plaque avant la déformation de la plaque pour donner une traverse de pare-chocs (2).
